# EUROPEAN PATENT APPLICATION

(11) **EP 2 677 439 A2**
(43) Date of publication of application: **25.12.2013**
(21) Application number: 13168980.4
(22) Date of filing: 23.05.2013
(51) Int. Cl.: G06F 13/40

(54) **Active cable management**

(30) Priority: 19.06.2012 US 201213526687
(71) Applicant: LSI Corporation, Milpitas, CA 95035 (US)
(72) Inventor: Wang, Ming-jen, Colorado Springs, CO 80907 (US)
(74) Representative: Williams, David John

(57) **Abstract**

Disclosed is a method and state machine that configures a serial attached SCSI (SAS) controller. The insertion of a mini-SAS HD cable is detected. Power is supplied a management interface of the cable. The nonvolatile memory in the mini-SAS HD cable is read to determine the type of cable and the type of transmitter supported by the cable. The cable is an active type cable, power is supplied to a non-management interface of the cable.

## Description

### BACKGROUND OF THE INVENTION

Mass storage systems continue to provide increased storage capacities to satisfy user demands. Photo and movie storage, and photo and movie sharing are examples of applications that fuel the growth in demand for larger and larger storage systems. A solution to these increasing demands is the use of arrays of multiple inexpensive disks. These arrays may be configured in ways that provide redundancy and error recovery without any loss of data. These arrays often are interconnected, and/or connected to a host using Serial Attached SCSI (SAS) communication links

SAS is a communication protocol used to move data to and from computer storage devices such as hard drives and tape drives. SAS is a point-to-point serial protocol that displace parallel SCSI bus technology in many computer systems and storage environments. SAS uses the standard SCSI command set. At the physical layer, the SAS standard defines connectors and voltage levels. The physical characteristics of the SAS wiring and signaling are compatible with and have loosely tracked that of serial ATA (SATA). SAS defines more rigorous physical signaling specifications as well as a wider allowable differential voltage swing intended to allow longer cabling.

### SUMMARY OF THE INVENTION

An embodiment of the invention may therefore comprise a method of configuring a serial attached SCSI (SAS) controller, comprising: receiving an first indicator that a mini-SAS HD cable has been inserted into a connector; supplying power to a management interface power contact of said connector; reading, from a nonvolatile memory in said mini-SAS HD cable, a second indicator of a transmitter technology supported by the mini-SAS HD cable; and, when the second indicator corresponds to an active type cable, enabling a non-management interface power contact of the connector to supply power to the mini-SAS HD cable.

An embodiment of the invention may therefore further comprise an apparatus for configuring a serial attached SCSI (SAS) controller, comprising: a connector adapted to receive a mini-SAS HD cable; a management interface power contact disposed in said connector; a non-management interface power contact disposed in said connector; a cable manager that receives a first indicator that the mini-SAS HD cable has been inserted into said connector, reads a nonvolatile memory in said mini-SAS HD cable to receive a second indicator of a transmitter technology supported by the mini-SAS HD cable, and, when the second indicator corresponds to an active type cable, enables the non-management interface power contact of the connector to supply power to the mini-SAS HD cable.

### BRIEF DESCRIPTION OF THE DRAWINGS

Figure 1 is a block diagram of a system with active cable management.

Figure 2 is a block diagram of an interface with active cable management.

Figure 3 is a flowchart of a method of configuring a serial attached SCSI (SAS) controller.

Figure 4 is a state transition diagram illustrating a method of configuring cables with a management interface.

Figure 5 is a block diagram of a computer system.

### DETAILED DESCRIPTION OF THE EMBODIMENTS

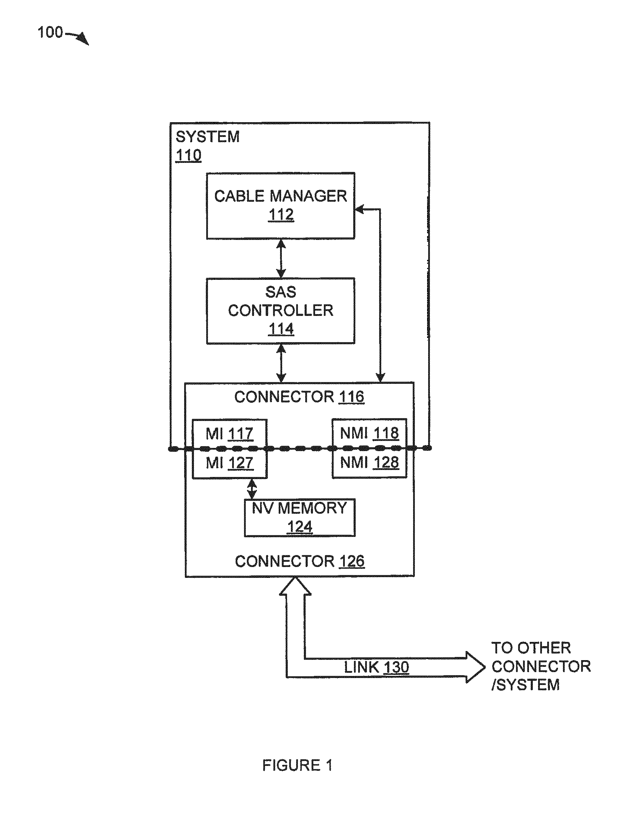

Figure 1 is a block diagram of a system with active cable management. In Figure 1, system 100 comprises system 110, connector 126, and link 130. System 110 includes cable manager 112, SAS controller 114, and connector 116. Connector 116 includes management interface 117 and non-management interface 118. Connector 126 includes management interface 127, non-management interface 128, and nonvolatile memory 126. Contacts of management interface 117 of connector 116 are coupled to contacts of management interface 127 of connector 126. Contacts of non-management interface 118 of connector 116 are coupled to contacts of non-management interface 128 of connector 126.

In an embodiment, connector 116 and connector 126 are SAS physical layer connectors. In particular, connector 116 is a mini-SAS HD connector and connector 126 is part of a mini-SAS HD cable. Connector 126 is operatively coupled to link 130. Link 130 operatively couples connector 126 to another connector and/or system. In particular, link 130 operatively couples connector 126 to another connector and/or system using SAS physical layer specifications and SAS protocol. Thus, connector 126 and link 130 comprise a free side SAS cable assembly. Various aspects of SAS are described in: SFF-8636, "Common Management Interface," Rev. 1.2, November 29, 2011; SFF-8449, "Specification for Shielded Cables Management Interface for SAS," Rev. 1.7, February 6, 2012; and, T10/2212-D (Working Draft American National Standard), "Serial Attached SCSI - 3 (SAS-3)", Rev. 01, April 23, 2012 which are all hereby incorporated herein by reference for all purposes.

Cable manager 112 is operatively coupled to SAS controller 114 and connector 116. SAS controller 114 is operatively coupled to connector 116. Nonvolatile memory 124 of connector 126 is operatively coupled to management interface 127. Thus, cable manager 112 of system 110 can configure SAS controller 114 based on signals sent/received to/from connector 116 (and thereby management interface 117 and non-management interface 118).

In an embodiment, system 110, and/or cable manager 112 may supply power to a power contact (Vman) of management interface 117. This can provide power for the circuitry of management interface 117 and/or circuitry used to read nonvolatile memory 124. Removal of power from the Vman contact may disable the circuitry of management interface 117. Upon restoration of power to the Vman contact, the circuitry of management interface 117 may perform necessary power up tasks. The process of cycling power off and on to management interface 117 may be used to reset management interface circuitry 117.

System 110, and/or cable manager 112 configures SAS controller 114. Cable manager 112 may receive a first indicator that a mini-SAS HD cable has been inserted into a connector. For example, a when connector 126 is plugged in to (i.e., mated with) connector 116, connector 126 may assert at least one of management interface contacts 117 (ModPrsL) to a logic "0" state (using active low logic). Connector 126 may keep ModPrsL asserted until connector 126 is no longer mated to connector 116. An indicator of the state of ModPrsL may be coupled to cable manager 112.

Using management interface 117, system 110, and/or cable manager 112 reads, from nonvolatile memory 124 in connector 126, an indicator of a transmitter technology supported by connector 126. For example, system 110, and/or cable manager 112 may read from nonvolatile memory 124 that connector 126 is an active type cable, a passive type cable, or an optical type cable. When the indicator read from nonvolatile memory 124 corresponds to an active type cable, system 110 and/or cable manager 112 may supply power to a power contact of non-management interface 118. System 110 and/or cable manager 112 may supply power to a power contact (Vact) of non-management interface 118 in order to supply power to circuitry on connector 126 and/or supply power for link 130.

When the indicator read from nonvolatile memory 124 corresponds to an active type cable, system 110 and/or cable manager 112 may configure SAS controller 114 to disable transmitter training on link 130. When the indicator read from nonvolatile memory 124 corresponds to a passive type cable, system 110 and/or cable manager 112 may configure SAS controller 114 to enable transmitter training on link 130. When the indicator read from nonvolatile memory 124 corresponds to an optical type cable, system 110 and/or cable manager 112 may configure the SAS controller 114 to run in optical mode on link 130.

System 110 and/or cable manager 112 may detect an error condition. Error conditions that may be detected comprise: an error reading ModPrsL; an error supplying power to Vman; an error condition reading nonvolatile memory 124 (e.g., an I2C retry count is exceeded); and, an error supplying power to Vact. In response to detecting the error condition, system 110 and/or cable manager 112 may set the link rate on link 130 to the lowest supported rate (e.g., 3 Gb/s). In response to detecting the error condition, system 110 and/or cable manager 112 may reset a plurality of links 130 associated with connector 116 and/or connector 126.

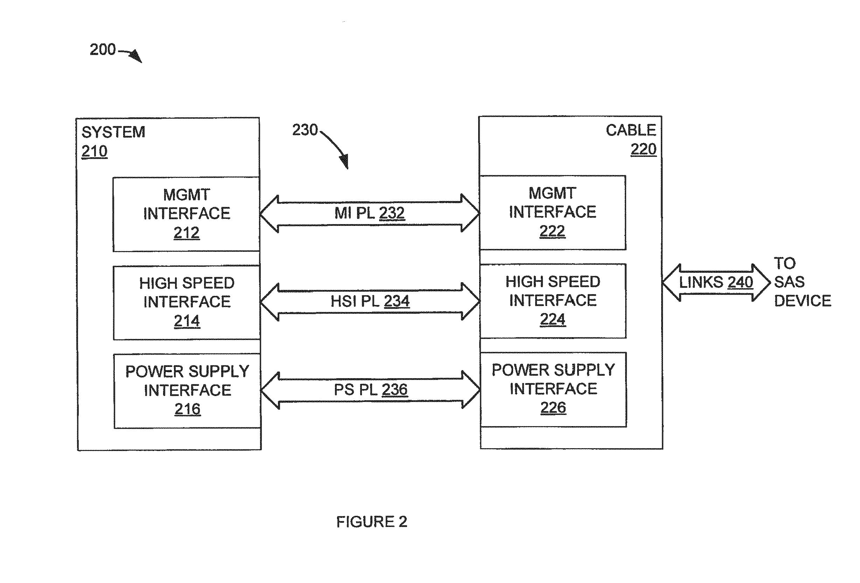

Figure 2 is a block diagram of an interface with active cable management. In Figure 2, system 200 comprises system 210, cable 220, interface 230, and links 240. System 210 is operatively coupled to cable 220 via interface 230. Interface 230 includes management interface physical layer 232, high speed interface physical layer 234, and power supply physical layer 236. System 210 includes management interface 212, high speed interface 214, and power supply interface 216. Cable 220 includes management interface 222, high speed interface 224, and power supply interface 226. Cable 220 is operatively coupled to another SAS device via one or more links 240.

Management interface physical layer 232 couples management interface 212 of system 210 to management interface 222 of cable 220. High speed interface physical layer 234 couples high speed interface 214 of system 210 to high speed interface 224 of cable 220. Power supply interface physical layer 236 couples power supply interface 216 of system 210 to power supply interface 226 of cable 220.

In an embodiment, interface 230 comprises a mini-SAS HD interconnection. Thus, interface 230 may comprise mini-SAS HD SAS free side and fixed side connectors System 210, may supply power to a power contact (Vman) of power supply interface 216. This can provide power for the circuitry of cable 220 via power supply physical layer 236 and power supply interface 226. Removal of power from the Vman contact of power supply interface 216 may disable the circuitry of cable 220. Upon restoration of power to the Vman contact, the circuitry of cable 220 may perform necessary power up tasks. The process of cycling power off and on to cable 220 may be used to reset the circuitry of cable 220, management interface 222, high speed interface 224, and/or links 240.

System 210 may receive a first indicator that a mini-SAS HD cable has been inserted. For example, a when a physical layer 230 connection is established by plugging cable 220 into system 210, cable 220 may assert a management interface 222 signal, ModPrsL, to a logic "0" state (using active low logic). Cable 220 may keep ModPrsL asserted until cable 220 is no longer mated to system 210.

System 210 may read from cable 220 an indicator of a transmitter technology supported by cable 220. Cable 220 may store the indicator of the transmitter technology supported by cable 220 in a nonvolatile memory (not shown in Figure 2). System 210 may read from cable 220 that cable 220 is an active type cable, a passive type cable, or an optical type cable. When cable 220 corresponds to an active type cable, system 210 may supply power to a power contact of power supply interface 216. Power contact of power supply interface 216 corresponds to a power contact (Vact) of a non-management interface (e.g., high speed interface 224) in order to supply power to cable 220 for links 240.

When cable 220 corresponds to an active type cable, system 210 may configure itself to disable transmitter training on links 240. When cable 220 corresponds to a passive type cable, system 210 may configure itself to enable transmitter training on links 240. When cable 220 corresponds to an optical type cable, system 210 may configure itself to run in optical mode on links 240.

System 210 may detect an error condition. Error conditions that may be detected comprise: an error reading ModPrsL; an error supplying power to Vman; an error condition reading nonvolatile memory 124 (e.g., an I2C retry count is exceeded); and, an error supplying power to Vact. In response to detecting the error condition, system 210 may set the link rate on links 240 to the lowest supported rate (e.g., 3 Gb/s). In response to detecting the error condition, system 210 may reset cable 220 and/or one or more of links 240 associated with cable 220.

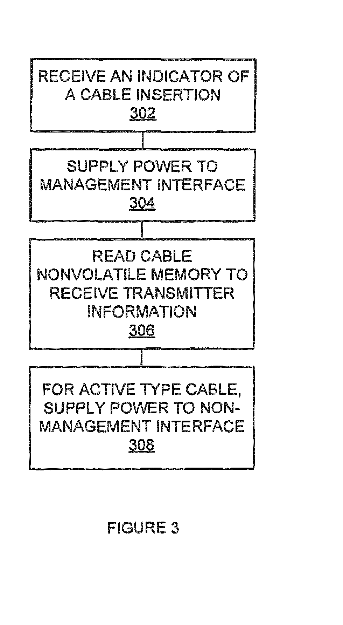

Figure 3 is a flowchart of a method of configuring a serial attached SCSI (SAS) controller. The steps illustrated in Figure 3 may be performed by one or more of the elements of system 100 and/or system 200. An indicator of a cable insertion is received (302). For example, system 100 may receive and indicator (e.g., ModPrsL asserted) that indicates a mini-SAS HD cable has been inserted into system 100. Power is supplied to a management interface (304). For example, system 100 may supply power to a power contact associated with management interface 117 in order to supply power to the management interface functions of connector 126.

Cable nonvolatile memory is read to receive transmitter information (306). For example, system 100 may read nonvolatile memory 124 which is associated with a cable in order to receive information about one or transmitters supported by the cable. If the cable is an active type cable, power is supplied to a non-management interface (308). For example, if system 100 reads from nonvolatile memory 124 that the cable is an active type cable, system 100 may supply power to non-management interface 118 in order to power circuitry associated with non-management interface 118.

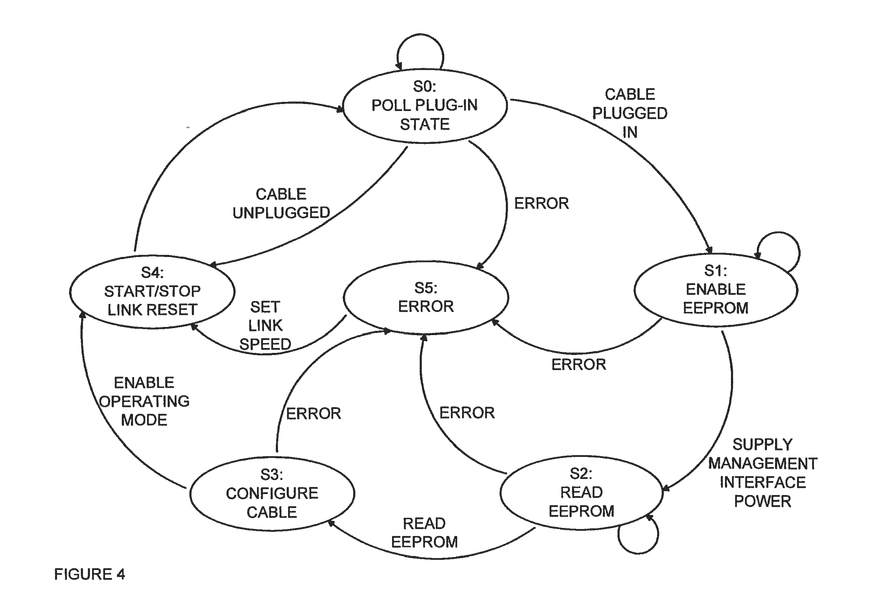

Figure 4 is a state transition diagram illustrating a method of configuring cables with a management interface. The steps and conditions illustrated by the state transition diagram illustrated in Figure 4 may be performed by one or more of the elements of system 100 and/or system 200. The steps and conditions illustrated by the state transition diagram illustrated in Figure 4 may be controlled by firmware instructions stored by one or more of the elements of system 100 and/or system 200.

State 0: Poll Plug-in state. During State 0, the system polls for the ModPrsL signal to go high or low. When the signal goes low, it indicates that a connector has been plugged in. When the signal goes low indicating that a cable has been plugged in, a transition to State 1 is made. When the signal goes high, it indicates that the connector has been unplugged. When the signal goes low indicating that a cable has been unplugged, a transition to State 4 is made. In an embodiment, the polling interval is 250 ms. In an embodiment, the system initializes to State 0 at the start-of-day. To constitute a successful exit to State 1 or State 4, the polling read is successful and the ModPrsL signal is different from a last known value. If the polling read failed, a transition to State 5 is made.

State 1: Enable EEPROM. During State 1, the system will provide the corresponding Vman signal/supply to enable the EEPROM on the connector/cable. If the I2C bus is free at the time (i.e, no other device/system is using the I2C bus), the system will reserve the appropriate I2C bus needed to access the EEPROM. If the write to provide the Vman signal/supply is successful and no one is using I2C bus at the moment, a transition to State 2 is made. If the write to provide the Vman signal/supply fails, a transition to State 5 is made.

State 2: Read EEPROM. During State 2, the system will read the EEPROM to determine the link rate and transmitter technology supported by the cable. The system may keep the read of the EEPROM single threaded to make I2C access easier. If the I2C request to read the EEPROM completes successfully, a transition to State 3 is made. If the I2C request failed more than a maximum retry count, a transition to State 5 is made.

State 3: Cable Configuration. During State 3, the system will turn on or off transmitter training based on whether the cable is passive or active, respectively. The system will also set up the hardware to run in optical mode if the cable supports the appropriate optical transmitters. Finally, if the cable is active, the system will provide the Vact signal/supply to enable the transceiver circuit on the connector/cable. If the write to provide the Vact signal/supply succeeds, a transition to State 4 is made. If the write to provide the Vact signal/supply fails, a transition to State 5 is made.

State 4: Start/Stop & Link Reset. During State 4, the system will set a flag to indicate whether link reset is allowed based on ModPrsL (i.e., based on whether a module is connected). The system will also start or stop the link reset on the links associated to the connector appropriately based on the previous state. When complete, State 4 transitions to State 0.

The systems, interface, cables, connectors, memories, state machines, and functions described above may be implemented with or executed by one or more computer systems. The methods described above may also be stored on a non-transitory computer readable medium. Many of the elements of system 100, and system 200 may be, comprise, be part of, or include computers systems. This includes, but is not limited to system 110, cable manager 112, SAS controller 114, connector 116, management interface 117, non-management interface 118, connector 126, nonvolatile memory 124, management interface 127, non-management interface 118, link 130, system 210, management interface 212, high speed interface 214, power supply interface 216, cable 220, management interface 222, high speed interface 224, power supply interface 226, interface 230, management interface physical layer 232, high speed physical layer 234, power supply physical layer 236, and/or links 240.

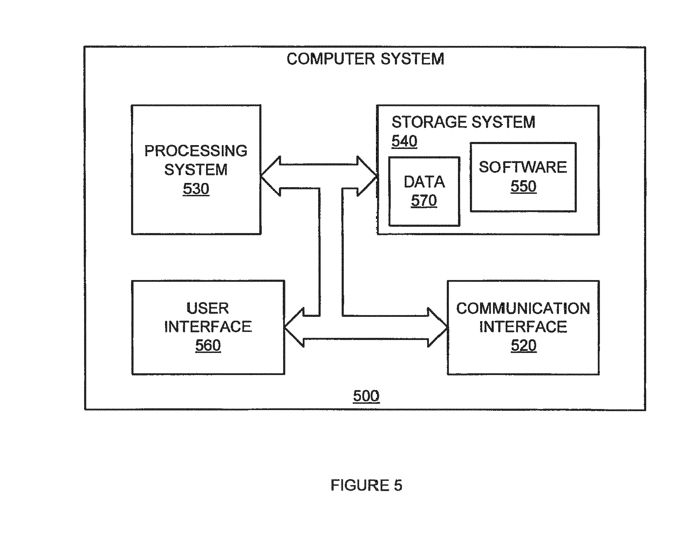

Figure 5 illustrates a block diagram of a computer system. Computer system 500 includes communication interface 520, processing system 530, storage system 540, and user interface 560. Processing system 530 is operatively coupled to storage system 540. Storage system 540 stores software 550 and data 570. Processing system 530 is operatively coupled to communication interface 520 and user interface 560. Computer system 500 may comprise a programmed general-purpose computer. Computer system 500 may include a microprocessor. Computer system 500 may comprise programmable or special purpose circuitry. Computer system 500 may be distributed among multiple devices, processors, storage, and/or interfaces that together comprise elements 520-570.

Communication interface 520 may comprise a network interface, modem, port, bus, link, transceiver, or other communication device. Communication interface 520 may be distributed among multiple communication devices. Processing system 530 may comprise a microprocessor, microcontroller, logic circuit, or other processing device. Processing system 530 may be distributed among multiple processing devices. User interface 560 may comprise a keyboard, mouse, voice recognition interface, microphone and speakers, graphical display, touch screen, or other type of user interface device. User interface 560 may be distributed among multiple interface devices. Storage system 540 may comprise a disk, tape, integrated circuit, RAM, ROM, network storage, server, or other memory function. Storage system 540 may be a computer readable medium. Storage system 540 may be distributed among multiple memory devices.

Processing system 530 retrieves and executes software 550 from storage system 540. Processing system 530 may retrieve and store data 570. Processing system 530 may also retrieve and store data via communication interface 520. Processing system 530 may create or modify software 550 or data 570 to achieve a tangible result. Processing system 530 may control communication interface 520 or user interface 560 to achieve a tangible result. Processing system 530 may retrieve and execute remotely stored software via communication interface 520.

Software 550 and remotely stored software may comprise an operating system, utilities, drivers, networking software, and other software typically executed by a computer system. Software 550 may comprise an application program, applet, firmware, or other form of machine-readable processing instructions typically executed by a computer system. When executed by processing system 530, software 550 or remotely stored software may direct computer system 500 to operate as described herein.

The foregoing description of the invention has been presented for purposes of illustration and description. It is not intended to be exhaustive or to limit the invention to the precise form disclosed, and other modifications and variations may be possible in light of the above teachings. The embodiment was chosen and described in order to best explain the principles of the invention and its practical application to thereby enable others skilled in the art to best utilize the invention in various embodiments and various modifications as are suited to the particular use contemplated. It is intended that the appended claims be construed to include other alternative embodiments of the invention except insofar as limited by the prior art.

## Claims

1. A method of configuring a serial attached SCSI (SAS) controller (114), comprising:
receiving an first indicator that a mini-SAS HD cable (126, 130) has been inserted into a connector (116);
supplying power to a management interface (117) power contact of said connector;
reading, from a nonvolatile memory (124) in said mini-SAS HD cable (126, 130), a second indicator of a transmitter technology supported by the mini-SAS HD cable (126, 130); and,
when the second indicator corresponds to an active type cable, enabling a non-management interface (118) power contact of the connector to supply power to the mini-SAS HD cable (126, 130).

2. The method of claim 1, further comprising:
when the second indicator corresponds to the active type cable, configuring the SAS controller (114) to disable transmitter training on a link (130) associated with the mini-SAS HD cable (126, 130).

3. The method of claim 1, further comprising:
when the second indicator corresponds to a passive type cable, configuring the SAS controller (114) to enable transmitter training on a link (130) associated with the mini-SAS HD cable (126, 130).

4. The method of claim 1, further comprising:
when the second indicator corresponds to an optical type cable, configuring the SAS controller (114) to run in optical mode on a link (130) associated with the mini-SAS HD cable (126, 130).

5. The method of claim 1, further comprising:
detecting an error condition;
in response to detecting the error condition, setting a link rate on a link (130) associated with the mini-SAS HD cable (126, 130) to the lowest supported rate.

6. The method of claim 5, further comprising:
in response to detecting the error condition, resetting a plurality of links (130) associated with the connector (116).

7. An apparatus for configuring a serial attached SCSI (SAS) controller, comprising:
a connector (116) adapted to receive a mini-SAS HD cable (126, 130);
a management interface (117) power contact disposed in said connector (116);
a non-management interface (118) power contact disposed in said connector (116); and,
a cable manager (112) that receives a first indicator that the mini-SAS HD cable (126, 130) has been inserted into said connector (116), reads a nonvolatile memory (124) in said mini-SAS HD cable (126, 130) to receive a second indicator of a transmitter technology supported by the mini-SAS HD cable (126, 130), and, when the second indicator corresponds to an active type cable, enables the non-management interface (118) power contact of the connector (116) to supply power to the mini-SAS HD cable (126, 130).

8. The apparatus of claim 7, wherein the cable manager (112), when the second indicator corresponds to the active type cable, configures a SAS controller (114) to disable transmitter training on a link (130) associated with the mini-SAS HD cable (126, 130).

9. The apparatus of claim 7, wherein the cable manager (112), when the second indicator corresponds to a passive type cable, configures a SAS controller (114) to enable transmitter training on a link (130) associated with the mini-SAS HD cable (126, 130).

10. The apparatus of claim 7, wherein the cable manager (112), when the second indicator corresponds to an optical type cable, configures a SAS controller (114) to run in optical mode on a link (130) associated with the mini-SAS HD cable (126, 130).

11. The apparatus of claim 7, wherein the cable manager (112), detects an error condition and in response to detecting the error condition, sets a link rate on a link (130) associated with the mini-SAS HD cable (126, 130) to the lowest supported rate.

12. The apparatus of claim 11, wherein the cable manager (112), in response to detecting the error condition, resets a plurality of links (130) associated with the connector (116).
